# EUROPÄISCHE PATENTANMELDUNG

(11) **EP 0 985 694 A1**
(43) Veröffentlichungstag der Anmeldung: **15.03.2000**
(21) Anmeldenummer: 99114729.9
(22) Anmeldetag: 26.07.1999
(51) Int. Cl.: C08G 18/80, C09D 133/02, C09D 167/00

(54) **Feste oxazolinterminierte, urethangruppenhaltige Polyadditionsverbindungen, ein Verfahren zu ihrer Herstellung sowie deren Verwendung**

(30) Priorität: 11.09.1998 DE 19841542
(71) Anmelder: Degussa-Hüls Aktiengesellschaft, 60287 Frankfurt am Main (DE)
(72) Erfinder: Spyrou, Emmanouil, Dr., 45772 Marl (DE); Wenning, Andreas, Dr., 48301 Nottuln (DE)

(57) **Zusammenfassung**

Die Erfindung betrifft feste oxazolinterminierte, urethangruppenhaltige Polyadditionsverbindungen, ein Verfahren zu ihrer Herstellung sowie deren Verwendung zur Herstellung von Kunststoffen, insbesondere Pulverlacken, die zu hochglänzenden, licht- und wetterstabilen Lackfilmen vernetzen.

## Beschreibung

Die Erfindung betrifft feste oxazolinterminierte, urethangruppenhaltige Polyadditionsverbindungen, ein Verfahren zu ihrer Herstellung sowie deren Verwendung zur Herstellung von Kunststoffen, insbesondere Pulverlacken, die zu hochglänzenden, licht- und wetterstabilen Lackfilmen vernetzen.

Bei Raumtemperatur feste extern oder intern blockierte Polyisocyanate stellen wertvolle Vernetzer für thermisch vernetzbare Polyurethan (PUR)-Pulverlacke dar.

So beschreibt z. B. die DE-OS 27 35 497 PUR-Pulverlacke mit hervorragender Witterungs- und Wärmestabilität. Die Vernetzer, deren Herstellung in der DE-OS 27 12 931 beschrieben wird. bestehen aus ε-Caprolactam blockiertem, Isocyanatgruppen enthaltendem Isophorondiisocyanat. Es sind auch urethan-, biuret- oder harnstoffgruppenhaltige Polyisocyanate bekannt, deren Isocyanatgruppen ebenfalls blockiert sind.

Der Nachteil dieser Systeme besteht in der Abspaltung des Blockierungsmittels während der thermischen Vernetzungsreaktion. Da das Blockierungsmittel somit in die Umwelt emittieren kann, müssen aus ökologischen und arbeitshygienischen Gründen besondere Vorkehrungen zur Reinigung der Abluft sowie zur Wiedergewinnung des Blockierungsmittels getroffen werden. Zudem weisen die Vernetzer eine geringe Reaktivität auf. Es sind Härtungstemperaturen oberhalb von 170 °C erforderlich.

Die DE-OS 30 30 539 und DE-OS 30 30 572 beschreiben Verfahren zur Herstellung von urethangruppenhaltigen Polyadditionsverbindungen, deren terminale Isocyanatgruppen mit Monoalkoholen oder Monoaminen irreversibel verkappt sind. Nachteilig sind insbesondere die Ketten abbrechenden Bestandteile der Vernetzer, die zu geringen Netzwerkdichten der PUR-Pulverbeschichtungen und damit zu mäßigen Lösemittelbeständigkeiten führen.

Hydroxylgruppenterminierte, uretdiongruppenhaltige Polyadditionsverbindungen sind Gegenstand der EP 0 669 353. Sie weisen aufgrund ihrer Funktionalität von zwei eine verbesserte Resistenz gegenüber Lösemitteln auf. Den Pulverlacken auf Basis dieser uretdiongruppenhaltigen Polyisocyanate ist gemeinsam, dass sie bei der Härtungsreaktion keine flüchtigen Verbindungen emittieren. Allerdings liegen die Einbrenntemperaturen mit mindestens 180 °C auf hohem Niveau.

Die Dokumente JP-A 51 125 116, JP-A 49 124 130, JP-A 51 054 626, DE-OS 25 05 862 und US 4 245 063 beschreiben Pulverlacke, deren Oxazolingruppen enthaltende Acrylatcopolymere mit Polycarbonsäuren gehärtet werden. Die Oxazolingruppen werden durch Copolymerisation von 2-Isopropenyl-2-oxazolin mit ungesättigten Monomeren in das Harz eingebaut.

Pulverlacke auf Basis saurer Polyester oder Acrylate und Polyoxazolinhärter werden z.B. in den DE-OS 23 28 012, DE-OS 23 28 013, JP-A 51 136 727, JP-A 50 037 832, JP-A 56 036 551, JP-A 51 134 727 und JP-A 51 089 534 beschrieben. Die Polyoxazolinhärter enthalten keine weiteren funktionellen Gruppen, sodass die Flexibilität der Pulverlacke und ihre Adhäsion zum Substrat verbesserungsbedürftig sind.

Die DE-OS 44 42 908 beschreibt den Einsatz von oxazolinterminierten Polyurethanen. Diese sind jedoch flüssig und daher für den Einsatz als Pulverlackhärter ungeeignet. Zudem wird die Härtung hier durch kationische Polymerisation eingeleitet, welche bekanntermaßen sehr störanfällig gegen Verunreinigungen ist und außerdem die Verwendung von basischen Pigmenten und Hilfsstoffen ausschließt.

Aufgabe der vorliegenden Erfindung war es daher, abspaltfreie, hochreaktive Vernetzer zur Herstellung von Kunststoffen, insbesondere von ökologisch wertvollen Pulverlacken, zu entwickeln, wobei die daraus hergestellten Pulverlacke die genannten Nachteile des Standes der Technik nicht mehr ausweisen sollen.

Die Aufgabe wurde gemäß den Patentansprüchen gelöst.

Gegenstand der vorliegenden Erfindung sind demnach feste oxazolinterminierte, urethangruppenhaltige Polyadditionsverbindungen mit einem Schmelzpunkt von 40 bis 130 °C und einem freien NCO-Gehalt von kleiner 3 Gew.-% im Wesentlichen enthaltend ein Reaktionsprodukt aus
a) mindestens einem mindestens difunktionellen Polyisocyanat und
b) mindestens einem hydroxy- oder aminofunktionellen Oxazolinderivat,
wobei das Äquivalentenverhältnis NCO : OH zwischen 0,8 : 1,2 und 1,2 : 0,8 liegt. Besonders bevorzugt ist ein Äquivalentenverhältnis NCO : OH von 1 : 1. Die Polyadditionsverbindungen können als weitere Komponente c) Kettenverlängerer enthalten.

Gegenstand der Erfindung ist auch die Verwendung der oxazolinterminierten urethangruppenhaltigen Polyadditionsverbindungen zur Herstellung von Kunststoffen, insbesondere in Kombination mit carboxylgruppenhaltigen Polymeren, sowie den in der Lackchemie üblichen Zuschlagstoffen, wie Pigmente, Füllstoffe, Verlaufsmittel, Entgasungsmittel, Katalysatoren und andere Additive, zur Herstellung von abspaltfreien, transparenten und pigmentierten Pulverlacken hoher Reaktivität und ausgezeichnetem Glanz.

Ein weitere Gegenstand der Erfindung sind abspaltfreie, transparente und pigmentierte Pulverlacke, welche die erfindungsgemäßen oxazolinterminierten urethangruppenhaltigen Polyadditionsverbindungen enthalten.

In den erfindungsgemäßen Polyadditionsverbindungen werden Polyisocyanate, die z. B. in Houben-Weyl, Methoden der Organischen Chemie, Band 14/2, Seite 61 ff. , und J. Liebigs Annalen der Chemie, Band 562, Seiten 75 bis 136, genannt werden, eingesetzt. Das Polyisocyanat kann jedes organische Polyisocyanat sein, welches zur Vernetzung von Verbindungen mit aktivem Wasserstoff geeignet ist, d. h. aliphatische einschließlich cyclioaliphatische, (cyclo)aliphatische, aromatische und heterocyclische Polyisocyanate mit mindestens zwei Isocyanatgruppen und Gemische hiervon. Repräsentative Beispiele der Polyisocyanate sind aliphatische Isocyanate wie Alkylenisocyanate, z. B. Ethylendiisocyanat, Propylendiisocyanat, Tetramethylendiisocyanat, Pentamethylendiisocyanat, 2-Methylpentamethylen-1,5-diisocyanat, Hexamethylendiisocyanat, Trimethylhexamethylen-1,6-diisocyanat, insbesondere das 2,2,4- und das 2,4,4-Isomere und technische Gemische beider Isomeren, Decamethylendiisocyanat und Dodecamethylendiisocyanat sowie Cycloalkylenisocyanate, z. B. 1,3-Cyclopentyldiisocyanat, 1,2-Cyclohexyldiisocyanat, 1,4-Cyclohexyldiisocyanat, ω,ω'-Diisocyanato-1,4-methylcyclohexan, ω,ω'-Diisocyanato-1,3-dimethylcyclohexan, 1-Methyl-2,4-diisocyanatocyclohexan, 4,4'-Methylen-bis(cyclohexylisocyanat) und 3,3,5-Trimethyl-1-isocyanato-3-isocyanatomethylcyclohexan. Repräsentative Beispiele für Polyisocyanate sind aromatische Isocyanate wie Arylisocyanate, z. B. m-Phenylendiisocyanat, p-Phenylendiisocyanat, 4,4'-Diphenyldiisocyanat, 1,4-Naphthalendiisocyanat und 1,5-Naphthalendiisocyanat sowie Alkarylisocyanate, z. B. Diisocyanato-diphenylmethan, insbesondere das 4,4'-Isomere, aber auch technische Gemische verschiedener Isomerer, beispielsweise der 4,4'- und 2,4'-Isomere, Diisocyanato-methyl-benzen, insbesondere das 2,4- und das 2,6-Isomere und technische Gemische beider Isomerer, 4,4'-Toluidindiisocyanat, 1,3-Bis(isocyanato-methyl)benzen und Polymethylenpolyphenylisocyanat, kernsubstituierte aromatische Isocyanate, z. B. Dianisidindiisocyanat, 4,4'-Diphenyletherdiisocyanat und Chlordiphenyldiisocyanat. Ebenfalls gut geeignet sind auch Polyisocyanate, die durch Umsetzung von Polyisocyanaten mit sich selbst über Isocyanatgruppen erhältlich sind, wie Isocyanurate, die durch Reaktion dreier Isocyanatgruppen entstehen Die Polyisocyanate können ebenfalls Biuret- oder Allophanatgruppen enthalten.

Als Oxazolinkomponente können alle Hydroxy- oder Aminoalkyl-Δ²-oxazoline der folgenden Zusammensetzung verwendet werden, 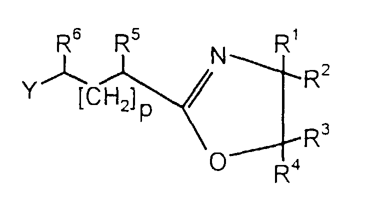 wobei R¹ bis R⁶ Wasserstoffatome oder Alkylgruppen mit 1 bis 4 Kohlenstoffatomen bedeuten können. Y stellt entweder eine Alkohol- oder eine Aminofunktion dar und p ist eine Zahl von 0 bis 3.

Besonders bevorzugt sind Oxazoline der genannten Art, bei denen R¹ und R² gleichzeitig oder unabhängig voneinander entweder Wasserstoff oder Methylgruppen bedeuten, R³ bis R⁶ Wasserstoffatome darstellen und p den Wert 0 oder 3 hat.

Die hydroxy- oder aminofunktionellen Oxazoline sind nach bekannten Verfahren zugänglich [DE-OS 39 14 133, DE-OS 39 14 159, DE-OS 14 45 642 oder Litt und Levy, J. Polym. Sci. A1, 1883 (1968)].

Als Kettenverlängerer finden Polyole, Polyamide oder Aminoalkohole Verwendung.

Geeignete Polyole werden z. B. in den DE-OSS 19 57 483, 21 05 777, 25 42 191 und 27 38 270 beschrieben. So sind z. B. die Diole Ethylenglykol, Propandiol-(1,2) und -(1,3), 2,2-Dimethylpropandiol-(1,3), Butandiol-(1,4), Hexandiol-(1,6), 2-Methylpentandiol-1,5, 2,2,4-Trimethylhexandiol-(1,6), 2,4,4-Trimethylhexandiol-(1,6), Heptandiol-(1,7), Dodecandiol-(1,12), Octadecadien-9,10-diol-(1,12), Thiodiglykol, Octadecandiol-(1,18), 2,4-Dimethyl-2-propylheptandiol-(1,3), Butendiol-(1,4), Butindiol-(1,4), Diethylenglykol, Triethylenglykol, Tetraethylenglykol, trans- und cis-1,4-Cyclohexandimethanol, die Triole Glycerin, Hexantriol-(1,2,6), 1,1,1-Trimethylolpropan und 1,1,1-Trimethylolethan und das Tetraol Pentaerythrit geeignet. Polyole im Sinne der Erfindung sind auch verzweigte oder bevorzugt lineare hydroxylgruppenhaltige Polyester mit einer Molmasse zwischen 250 und 2.000. Sie können z. B. durch Kondensation von Diolen mit Dicarbonsäure hergestellt werden. Ihre Herstellung wird z. B. in der EP 0 669 353 beschrieben.

Polyole im Sinne der Erfindung sind auch hydroxylgruppenhaltige Polyester, Polythioether, Polyether, Polycaprolactame, Polyepoxide, Polyesteramide oder Polyurethane.

Für die Herstellung von Polyestern bevorzugte Carbonsäuren können aliphatischer, cycloaliphatischer, aromatischer und/oder heterocyclischer Natur sein und gegebenenfalls durch Halogenatome substituiert und/oder ungesättigt sein. Als Beispiele hierfür seien genannt: Bernstein-, Adipin-, Kork-, Azelain-, Sebacin-, Phthal-, Terephthal-, Isophthal-, Trimellit-, Pyromellit-, Tetrahydrophthal-, Hexahydrophthal-, Hexahydroterephthal-, Di- und Tetrachlorphthal-, Endomethylentetrahydrophthal-, Glutar-, Malein- und Fumarsäure bzw. - so weit zugänglich - deren Anhydride, Terephthalsäuredimethylester, Terephthalsäure-bis-glykolester, weiterhin cyclische Monocarbonsäure, wie Benzoesäure, p-tert.-Butylbenzoesäure oder Hexahydrobenzoesäure.
Als mehrwertige Alkohole kommen z. B. Ethylenglykol, 1,2- und 1,3-Propylenglykol, 1,4- und 2,3-Butylenglykol, Di-β-hydroxyethylbutandiol, 1,6-Hexandiol, 1,8-Octandiol, Neopentylglykol, Cyclohexandiol, Bis-(1,4-hydroxymethyl)-propan, 2-Methyl-propandiol-1,3. 2-Methyl-pentandiol-1,5, 2,2,4(2,4,4)-Trimethylhexandiol-1,6, Glycerin, Trimethylolpropan, Trimethylolethan, Hexantriol-1,2,6, Butantriol-1,2,4, Tris-(β-hydroxyethyl)-isocyanurat, Pentaerythrit, Mannit und Sorbit sowie Diethylenglykol, Triethylenglykol, Tetraethylenglykol, Dipropylenglykol, Polypropylenglykol, Polybutylenglykol, Xylylenglykol und Hydroxypivalinsäureneopentylglykolester infrage.

Auch Mono- und Polyester aus Lactonen, z. B. ε-Caprolactam oder Hydroxycarbonsäuren, z. B. Hydroxypivalinsäure, ε-Hydroxydecansäure, ε-Hydroxycapronsäure, Thioglykolsäure, können eingesetzt werden. Polyester aus den oben genannten Polycarbonsäuren bzw. deren Derivaten und Polyphenolen, die Hydrochinon, Bisphenol-A, 4,4'-Dihydroxybiphenyl oder Bis-(4-hydroxyphenyl)-sulfon; Polyester der Kohlensäure, die aus Hydrochinon, Diphenylolpropan, p-Xylylenglykol, Ethylenglykol, Butandiol oder Hexandiol-1,6 und anderen Polyolen durch übliche Kondensationsreaktionen, z. B. mit Phosgen oder Diethyl- bzw. Diphenylcarbonat, oder aus cyclischen Carbonaten, wie Glykolcarbonat oder Vinylidencarbonat, durch Polymerisation in bekannter Weise erhältlich sind; Polyester der Kieselsäure, Polyester der Phosphorsäure, z. B. aus Methan-, Ethan-, β-Chlorethan-, Benzol- oder Styrolphosphorsäure-, -phosphorsäurechlorid oder -phosphorsäureester und Polyslkoholen oder Polyphenolen der oben genannten Art; Polyester der Borsäure; Polysiloxane, wie z. B. die durch Hydrolyse von Dialkyldichlorsilanen mit Wasser und nachfolgende Behandlung mit Polyalkoholen, oder durch Anlagerung von Polysiloxandihydriden an Olefinen, sowie Alkylalkohol oder Acrylsäure, erhältlichen Produkte, können auch eingesetzt werden.

Bevorzugte Polyester sind z. B. auch die Reaktionsprodukte von Polycarbonsäuren und Glycidverbindungen, wie sie z. B. in der DE-OS 24 10 513 beschrieben sind.

Beispiele für Glycidylverbindungen, die verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat, Alkylenoxide mit 4 bis 18 Kohlenstoffatomen, wie Butylenoxid, und Glycidylether, wie Octylglycidylether.

Als Dicarbonsäuren können bei diesem Verfahren sämtliche unter II im Folgenden aufgeführte Polycarbonsäuren verwendet werden, Monocarbonsäuren, welche beispielsweise unter III aufgeführt sind, können ebenfalls eingesetzt werden.

Bevorzugte Komponenten sind auch monomere Ester, z. B. Dicarbonsäure-bis-hydroxy(alkohol)ester, Monocarbonsäureester von mehr als zweiwertigen Polyolen und Oligoester, die durch Kondensationsreaktionen aus in der Lackchemie üblichen Rohstoffen hergestellt werden können. Als solche sind z. B. anzusehen:
I. Alkohole mit 2 bis 24, vorzugsweise 2 bis 10, C-Atomen und 2 bis 6 an nicht aromatischen C-Atomen gebundenen OH-Gruppen, z. B. Ethylenglykol, Propylenglykol, Diethylenglykol, Dipropylenglykol, Butandiole, Neopentylglykol, Hexandiole, Hexantriole, Perhydrobisphenol, Dimethylolcyclohexan, Glycerin, Trimethylolethan, Trimethylolpropan, Pentaerythrit, Dipentaerythrit, Mannit;
II. Di- und Polycarbonsäuren mit 4 bis 36 C-Atomen und 2 bis 4 Carboxylgruppen sowie deren veresterungsfähige Derivate, wie Anhydride und Ester, z. B. Phthalsäure(anhydrid), Isophthalsäure, Terephthalsäure, Alkyltetrahydrophthalsäure, Endomethylentetrahydrophthalsäureanhydrid, Adipinsäure, Bernsteinsäure, Maleinsäure, Fumarsäure, Dimerfettsäuren, Trimellitsäure, Pyromellitsäure, Azelainsäure;
III. Monocarbonsäuren mit 6 bis 24 C-Atomen, z. B. Caprylsäure, 2-Ethylhexansäure, Benzoesäure, p-tert.-Butylbenzoesäure, Hexahydrobenzoesäure, Monocarbonsäuregemische natürlicher Öle und Fette, wie Cocosfettsäure, Sojaölfettsäure, Ricinenfettsäure, hydrierte und isomerisierte Fettsäuren, wie 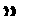 Konjuvandol"-Fettsäure sowie deren Gemische, wobei die Fettsäuren auch als Glyceride einsetzbar sind und unter Umesterung und/oder Dehydratisierung umgesetzt werden können;
IV. einwertige Alkohole mit 1 bis 18 C-Atomen, z. B. Methanol, Ethanol, Isopropanol, Cyclohexanol, Benzylalkohol, Isodecanol, Nonanol, Octanol, Oleylalkohol.

Die Polyester können auf an sich bekannte Weise durch Kondensation in einer Inertgasatmosphäre bei Temperaturen von 100 bis 260 °C, vorzugsweise 130 bis 220 °C, in der Schmelze oder in azeotroper Fahrweise gewonnen werden, wie es z. B. in Methoden der Organischen Chemie (Houben-Weyl); Band 14/2, Seiten 1 bis 5, 21 bis 23, 40 bis 44, Georg Thieme Verlag, Stuttgart, 1963, oder bei C. R. Martens, Alkyd Resins, Seiten 51 bis 59, Reinhold Plastics Appl. Series, Reinhold Publishing Comp., New York, 1961, beschrieben ist.

Als Polyole kommen außerdem hydroxyfunktionelle Polyether und Polycarbonate in Betracht. Bevorzugte Polyether können z. B. durch Polyaddition von Epoxiden, wie Ethylenoxid, Propylenoxid, Butylenoxid, Trimethylenoxid, 3,3-Bis-(chlormethyl)-oxabicyclobutan, Tetrahydrofuran, Styroloxid oder dem Bis-(2,5)-epoxypropylether des Diphenylolpropans, durch kationische Polymerisation in Gegenwart von Lewissäuren, wie z. B. Bortrifluorid, oder durch anionische Polymerisation mit Alkalihydroxiden oder Alkalialkoholaten oder durch Anlagerung dieser Epoxide, gegebenenfalls im Gemisch oder nacheinander, an Startkomponenten mit reaktionsfähigen Wasserstoffatomen, wie Alkohole oder Amine, z. B. Wasser, Ethylenglykol, Polypropylenglykol-(1,3) oder -(1,2), Pentamethylenglykol, Hexandiol, Decamethylenglykol, Trimethylolpropan, Anilin, Ammoniak, Ethanolamin, Ethylendiamin, Di-(β-hydroxypropyl)-methylamin, sowie hydroxyalkylierte Phenole, wie z. B. Di-(β-hydroxyethoxy)-resorcin, hergestellt werden.

Beispielhaft genannte Polyole, die Carbonatgruppen aufweisen, können bekanntermaßen durch Umsetzung der beispielhaft genannten zweiwertigen Alkohole des Molekulargewichtsbereichs 62 bis 300 mit Diarylcarbonaten, wie z. B. Diphenylcarbonat, Phosgen oder bevorzugt cyclischen Carbonaten, wie z. B. Trimethylencarbonat oder 2,2-Dimethyl-trimethylencarbonat (NPC) oder Gemischen solcher cyclischen Carbonate erhalten werden. Besonders bevorzugte Carbonatdiole sind solche, die aus den genannten zweiwertige Alkoholen als Startermoleküle und NPC unter Ringöffnung hergestellt werden können.

Zu den beispielhaft aufgeführten Verbindungen mit gegenüber Isocyanaten reaktionsfähigen Gruppen sind auch z. B. die in der Polyurethanchemie an sich bekannten Polythioether, Polyacetale, Polyepoxide, Polyesteramide oder Polyurethane des Molekulargewichtsbereichs 250 bis 8.500, welche gegenüber Isocyanatgruppen reaktionsfähige Hydroxylgruppen aufweisen, geeignet.

Selbstverständlich können auch Mischungen der vorgenannten Polyole verwendet werden.

Von den für die Kettenverlängerung geeigneten Polyaminen seien beispielsweise das 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, 3-(Cyclohexylamino)propylamin, 4,4'-Diaminodicyclohexylmethan, Isophorondiamin, 4,7-Dioxadecan-1,10-diamin, N-(2-Aminoethyl)-1,2-ethandiamin, N-(3-Aminopropyl)-1,3-propandiamin, N,N''-1,2-Ethandiylbis-(1,3-propandiamin) sowie Hexamethylendiamine, die auch einen oder mehrere C₁-C₄-Alkylreste tragen können, genannt. Des Weiteren können auch disekundäre oder primäre/sekundäre Diamine, wie sie z. B. in bekannter Weise aus den entsprechenden diprimären Diaminen durch Reaktion mit einer Carbonylverbindung, wie z. B. einem Keton oder Aldehyd, und nachfolgender Hydrierung oder durch Addition von diprimären Diaminen an Acrylsäureester gewonnen werden, eingesetzt werden.

Auch Mischungen der genannten Polyamine sind verwendbar.

Als Aminoalkohole seien beispielhaft Monoethanolamin, 3-Amino-1-propanol, Isopropanolamin, Aminoethoxyethanol, N-(2-Aminoethyl)ethanolamin, N-Ethylethanolamin, N-Butylethanolamin, Diethanolamin, 3-(Hydroxyethylamino)-1-propanol und Diisopropanolamin genannt.

Mischungen der aufgeführten Kettenverlängerer sind selbstverständlich einsetzbar.

Ein weiterer Gegenstand dieser Erfindung ist ein Verfahren zur Herstellung der erfindungsgemäßen Polyadditionsverbindungen.

Die Reaktion zwischen Polyisocyanat, Kettenverlängerer und Oxazolinderivat zu den erfindungsgemäßen Polyadditionsverbindungen wird, wie folgt beschrieben, durchgeführt. Die Temperatur liegt in der Regel zwischen Raumtemperatur und 120 °C, die Reaktionszeit bei 30 Minuten bis 5 Stunden. Je nach Reaktivität der einzelnen Komponenten können sowohl Reaktionszeiten wie auch -temperaturen deutlich über- oder unterschritten werden. Üblicherweise wird unter Feuchtigkeitsausschluss das Polyisocyanat vorgelegt, gegebenenfalls mit einem wasserfreien, nicht aktiven wasserstoffhaltigen Lösemittel verdünnt und dann portionsweise erst der Kettenverlängerer und dann das Oxazolinderivat (wahlweise auch umgekehrt) zugegeben. Zur Beschleunigung der Reaktion von Isocyanaten mit Alkoholen können die üblichen Katalysatoren, vor allem Zinn- und Zinkverbindungen, wie z. B. Dibutylzinndilaurat oder Zinkoctoat, oder aber tertiäre Amine, wie z. B. 1,4-Diazabicyclo-(2,2,2)-octan, zugegeben werden. Die Reaktion zwischen Aminen und Isocyanaten kann mit Säurekatalysatoren, wie z. B. 2-Ethylhexansäure, beschleunigt werden. Die Reaktion der einzelnen Komponenten kann auf einfache Weise über das noch nicht umgesetzte Isocyanat kontrolliert werden, beispielsweise durch Reaktion mit Dibutylamin und Rücktitration mit Salzsäure. Der Endpunkt der Reaktion ist eingetreten, wenn auf diese Weise kein freies Isocyanat mehr nachzuweisen ist. Das Reaktionsgemisch wird abgekühlt, das eventuell enthaltene Lösemittel abgetrennt. Der resultierende Feststoff hat einen Schmelzpunkt von 40 bis 130 °C.

Ein weiterer Gegenstand der vorliegenden Erfindung ist die Verwendung der oxazolinterminierten, urethangruppenhaltigen Polyadditionsverbindungen zur Herstellung von Kunststoffen, insbesondere in Kombination mit carboxylterminierten Polymeren und den in der Lackchemie üblichen Zusatzstoffen zur Herstellung von abspaltfreien, transparenten und pigmentierten Pulverlacken, die sich durch sehr gute Reaktivität auszeichnen, und damit ökonomisch wie ökologisch wertvoll sind.

Ein weiterer Gegenstand der vorliegenden Erfindung sind abspaltfreie, transparente und pigmentierte Pulverlacke, bestehend aus den erfindungsgemäßen Polyadditionsverbindungen in Kombination mit carboxylgruppenhaltigen Polymeren. Als Polymere können Polymerisate, Polykondensate und Polyadditionsverbindungen eingesetzt werden. Grundsätzlich kann jedes Polymer verwendet werden, das mindestens zwei Carboxylgruppen enthält und bei mindestens 70 °C schmilzt.

Besonders bevorzugt sind im Rahmen der Erfindung Polycarboxylpolyester und Polycarboxylpolyacrylate.

Bei den carboxylgruppenhaltigen Polymeren handelt es sich bevorzugt um Polyesterpolycarbonsäuren, die aus Polyolen und Polycarbonsäuren bzw. deren Derivaten hergestellt werden. Der Schmelzbereich dieser sauren Polyester liegt in einem Bereich von 60 bis 160 °C, vorzugsweise 80 bis 120 °C; ihre Säurezahl variiert von 10 bis 150 mg KOH/g, vorzugsweise 30 bis 60 mg KOH/g. Die OH-Zahlen sollen unter 10 mg KOH/g liegen.

Für die Herstellung der erfindungsgemäß zu verwendenden Polyesterpolycarbonsäuren werden Polycarbonsäure, wie z. B. Oxal-, Adipin-, 2,2,4(2,4,4)-Trimethyladipin-, Azelain-, Sebacin-, Decandicarbon-, Dodecandicarbon-, Fumar-, Phthal-, Isophthal-, Terephthal-, Trimellit-, Pyromellitsäure eingesetzt. Für die sauren Polyester werden als Polyole beispielhaft folgende verwendet: Ethylenglykol, 1,2- und 1,3-Propandiol, 1,2-, 1,3-, 1,4- und 2,3-Butandiol, 1,5-Pentandiol, 3-Methyl-1,5-pentandiol, Neopentylglykol, 1,12-Dodecandiol, 2,2,4(2,4,4)-Trimethyl-1,6-hexandiol, Trimethylolpropan, Glycerin, Pentaerythrit, 1,4-Bishydroxymethylcyclohexan, Cyclohexan-1,4-diol, Diethylenglykol, Triethylenglykol sowie Dipropylenglykol. Selbstverständlich können auch Hydroxylgruppen enthaltende Polyester, die nach bekannten Verfahren aus Polycarbonsäuren und Polyolen hergestellt werden, mit Polycarbonsäuren und/oder Polycarbonsäureanhydriden zu den Polyesterpolycarbonsäuren umgesetzt werden.

Geeignete carboxylfunktionelle Acrylatpolymere besitzen eine Säurezahl von 10 bis 150 mg KOH/g, hergestellt durch Copolymerisation eines Monomerengemisches, bestehend aus,
a) 0 bis 70 Gew.-Teilen Methyl(meth)acrylat,
b) 0 bis 60 Gew.-Teilen (Cyclo)Alkylestern der Acryl- und/oder Methacrylsäure mit 2 bis 18 Kohlenstoffatomen im Alkyl- bzw. im Cycloalkylrest,
c) 0 bis 90 Gew.-Teilen Vinylaromaten und
d) 0 bis 60 Gew.-Teilen olefinisch ungesättigten Carbonsäuren,
wobei die Summe der Gewichtsteile der Komponenten a) bis d) 100 ergibt.

Bei den Monomeren b) handelt es sich vorzugsweise um (Cyclo)Alkylester der Acryl- oder Methacrylsäure mit 2 bis 18 Kohlenstoffatomen im (Cyclo)Alkylrest. Beispiele geeigneter bzw. bevorzugt geeigneter Monomerer b) sind Ethyl(meth)acrylat, n-Propyl(meth)acrylat, Isopropyl(meth)acrylat, n-Butyl(meth)acrylat, Isobutyl(meth)acrylat, tert.-Butyl(meth)acrylat, 2-Ethylhexyl(meth)acrylat, Cyclohexylmethacrylat, Neopentylmethacrylat, Isobornylmethacrylat, 3,3,5-Trimethylcyclohexylmethacrylat und Stearylmethacrylat.

Als Monomere c) kommen z. B. Styrol, Vinyltoluol und Ethylstyrol in Betracht. Beispiele für d) sind Acryl- und Methacrylsäure, die auch bevorzugt eingesetzt werden, wie auch Crotonsäure, Itaconsäure, Fumarsäure, Maleinsäure und Citraconsäure.

Die Herstellung der Copolymerisate kann durch Copolymerisation der beispielhaft genannten Monomere a) bis d) nach üblichen radikalischen Polymerisationsverfahren erfolgen, wie beispielsweise Lösungs-, Emulsions-, Perl- oder Substanzpolymerisation.

Dabei werden die Monomeren bei Temperaturen von 60 bis 160 °C, vorzugsweise 80 bis 150 °C, in Gegenwart von Radikalbildnern und gegebenenfalls Molekulargewichtsreglern copolymerisiert.

Die Herstellung der carboxylfunktionellen Acrylat-Copolymerisate erfolgt in inerten Lösemitteln. Geeignete Lösemittel sind beispielsweise Aromaten, wie Benzol, Toluol, Xylol; Ester, wie Ethylacetat, Butylacetat, Hexylacetat, Heptylacetat, Methylglykolacetat, Ethylglykolacetat, Methoxypropylacetat; Ether, wie Tetrahydrofuran, Dioxan, Diethylenglykoldimethylether; Ketone, wie Aceton, Methylethylketon, Methylisobutylketon, Methyl-n-amylketon, Methylisoamylketon, oder beliebige Gemische derartiger Lösemittel.

Die Herstellung der Copolymerisate kann kontinuierlich oder diskontinuierlich erfolgen. Üblicherweise wird in einen Polymerisationsreaktor gleichmäßig und kontinuierlich die Monomermischung und der Initiator eindosiert und gleichzeitig die entsprechende Menge Polymerisat kontinuierlich abgeführt. Vorzugsweise können so chemisch nahezu einheitliche Copolymere hergestellt werden. Chemisch nahe einheitliche Copolymere können auch hergestellt werden, indem man die Reaktionsmischung mit konstanter Geschwindigkeit in einen Rührkessel einlaufen lässt, ohne das Polymerisat abzufuhren.

Man kann auch einen Teil der Monomeren beispielhaft in Lösemitteln der genannten Art vorlegen und die restlichen Monomeren und Hilfsmittel getrennt oder gemeinsam in diese Vorlage bei der Reaktionstemperatur eintragen. Im Allgemeinen erfolgt die Polymerisation unter Atmosphärendruck, kann jedoch auch bei Drücken bis zu 25 bar durchgeführt werden. Die Initiatoren werden in Mengen von 0,05 bis 15 Gew.-%, bezogen auf die Gesamtmenge der Monomeren, eingesetzt.

Geeignete Initiatoren sind übliche Radikalstarter, wie z. B. aliphatische Azoverbindungen, wie Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, wie z. B. Acetyl-, Propionyl- oder Butyrylperoxid, mit Brom-, Nitro-, Methyl- oder Methoxygruppen substituierte Benzoylperoxide, Laurylperoxide; symmetrische Peroxydicarbonate, z. B. tert.-Butylperbenzoat; Hydroperoxide, wie beispielsweise tert.-Butylhydroperoxid, Cumolhydroperoxid; Dialkylperoxide, wie Dicumylperoxid, tert.-Butylcumylperoxid oder Di-tert.-butylperoxid. Zur Regelung des Molekulargewichts der Copolymerisate können übliche Regler bei der Herstellung eingesetzt werden. Beispielhaft genannt seien Mercaptopropionsäure, tert.-Dodecylmercaptan, n-Dodecylmercaptan oder Diisopropylxanthogendisulfid. Die Regler können in Mengen von 0,1 bis 10 Gew.-%, bezogen auf die Gesamtmenge der Monomeren, zugegeben werden.

Die bei der Copolymerisation anfallenden Lösungen der Copolymerisate können dann ohne weitere Aufarbeitung dem Ausdampfungs- bzw. Entgasungsprozess zugeführt werden, bei dem das Lösemittel beispielsweise in einem Ausdampfextruder oder Sprühtrockner bei ca. 120 bis 160 °C und einem Vakuum von 100 bis 300 mbar entfernt und die erfindungsgemäß zu verwendenden Copolymerisate gewonnen werden.

Das Mischungsverhältnis der carboxylgruppenhaltigen Polymere und den erfindungsgemäßen Polyadditionsverbindungen wird in der Regel so gewählt, dass das Verhältnis Carboxylgruppen zu Oxazolingruppen 1 : 10 bis 10 : 1 beträgt.

Die erfindungsgemäße Polyadditionsverbindung wird für die Herstellung von Pulverlacken mit dem geeigneten carboxylgruppenhaltigen Polymeren und gegebenenfalls Katalysatoren sowie Pigmenten und üblichen Hilfsmitteln wie Füllstoffen, Wasserfängern, wie z. B. Molekularsiebe, wasserfreies Aluminiumsulfat, Trialkylorthoformiate, Benzoylchlorid, Carbodiimide, p-Toluolsulfonylisocyanat und Oxazolidine, und Verlaufsmitteln, z. B. Siliconöl, Acrylharzen, gemischt und in der Schmelze homogenisiert.

Als Katalysatoren eignen sich beispielsweise phosphor-, zinn- oder titanbasierende Katalysatoren, wie z. B. Triethylphosphit, Triphenylphosphit, Tetrabutyltitanat, Dibutylzinndilaurat, Zinkoctoat, -acetat und -stearat, sowie andere. Die werden in einer Konzentration von 0,01 bis 5 Gew.-%, bezogen auf die Menge an carboxylterminiertem Polymer, eingesetzt.

Die Homogenisierung kann in geeigneten Aggregaten, wie z. B. beheizbaren Knetern, vorzugsweise jedoch durch Extrudieren, erfolgen, wobei Temperaturobergrenzen von 120 bis 130 °C nicht überschritten werden sollten. Die extrudierte Masse wird nach Abkühlen auf Raumtemperatur und nach geeigneter Zerkleinerung zum sprühfertigen Pulver vermahlen. Das Auftragen des sprühfertigen Pulvers auf geeignete Substrate kann nach den bekannten Verfahren, wie z. B. durch elektrostatisches Pulversprühen, Wirbelsintern, oder elektrostatisches Wirbelsintern erfolgen. Nach dem Pulverauftrag werden die beschichteten Werkstücke zur Aushärtung 60 bis 4 Minuten auf eine Temperatur von 120 bis 220 °C, vorzugsweise 30 bis 6 Minuten bei 120 bis 160 °C erhitzt.

Nachfolgend wird der Gegenstand der Erfindung anhand von Beispielen näher erläutert.

### Beispiele

### 1. Darstellung der erfindungsgemäßen Polyadditionsverbindungen

- VESTANAT T 1890/100:: Isocyanurat des Isophorondiisocyanats, NCO-Zahl: 17,3 %(CREANOVA Spezialchemie GmbH)
- TERATHANE 650:: Polytetrahydrofuran, Molgewicht 656 g/mol (DuPont)
- DESMODUR N 3300:: Isocyanurat des Hexamethylendiisocyanats, NCO-Zahl: 21,3 % (Bayer AG)

a) 368 g VESTANAT T 1890/100 wurden in 327 g wasserfreiem Ethylacetat gelöst und mit 0,3 g Dibutylzinndilaurat versetzt, auf 60 °C aufgeheizt und 239 g 2-(5-Hydroxypentyl)-2-oxazolin portionsweise zugegeben. Nach 3 Stunden bei 60 °C wurde eine NCO-Zahl von weniger als 0,1 % ermittelt und das Lösemittel im Vakuum abgezogen. Der getrocknete Feststoff hat einen Schmelzpunkt von 70 bis 74 °C und einen TG von 42 °C.
b) 752 g VESTANAT T 1890/100 wurden in 576 g wasserfreiem Ethylacetat gelöst und mit 0,5 g Dibutylzinndilaurat und 233 g TERATHANE 650 versetzt. Nach 3 Stunden bei 60 °C wurden 317 g 2-(5-Hydroxypentyl)-2-oxazolin zugetropft und weitere 2 Stunden bei 60 °C erhitzt. Danach betrug die NCO-Zahl weniger als 0,1 %, die Lösung wurde abgekühlt und das Lösemittel im Vakuum entfernt. Der getrocknete Feststoff hat einen Schmelzpunkt von 84 bis 87 °C und einen TG von 48 °C.
c) 618 g VESTANAT T 1890/100 wurden in 627 g wasserfreiem Ethylacetat gelöst und mit 99 g DESMODUR N 3300 versetzt. Nach Zugabe von 0,6 g Dibutylzinndilaurat wurden 472 g 2-(5-Hydroxypentyl)-2-oxazolin portionsweise addiert, auf 60 °C aufgeheizt und 3 Stunden bei dieser Temperatur gehalten. Danach war kein freies Isocyanat mehr festzustellen. Das vom Lösemittel befreite Pulver wies einen Schmelzpunkt von 62 °C und einen TG von 42 °C auf.

### 2. Polycarboxylpolyester

URALAC P 3700, Säurezahl: 34 bis 40 mg KOH/g, Glasübergangspunkt: 57 °C (DSM)
URALAC P 5000, Säurezahl: 32 bis 38 mg KOH/g, Glasübergangspunkt: 58 °C (DSM)

### 3. Pulverlacke

### Allgemeine Herstellungsvorschrift:

Die zerkleinerten Einsatzstoffe - erfindungsgemäße Polyadditionsverbindungen, Verlaufsmittel, Katalysatoren - werden in einem Kollergang innig vermischt und anschließend im Extruder bis maximal 130 °C homogenisiert. Nach dem Erkalten wird das Extrudat gebrochen und mit einer Stiftsmühle auf eine Korngröße < 100 µm gemahlen. Das so hergestellte Pulver wird mit einer elektrostatischen Pulverspritzanlage bei 60 KV auf entfettete, gegebenenfalls vorbehandelte Eisenbleche appliziert und in einem Umlufttrockenschrank bei Temperaturen zwischen 120 und 160 °C eingebrannt.

**Tabelle 1**

| **Beispiel Rezeptur*** | **I** | **II** | **III** | **IV** |
|---|---|---|---|---|
| Vernetzer gemäß Beispiel 1 | 26,3 a | 33,3 b | 23,2 c | 15,8 a |
| URALAC P 5000 | | 65,2 | | |
| URALAC P 3700 | 72,2 | | 75,3 | 43,3 |
| COOH/Oxazolin | 1:1,3 | 1:1,2 | 1:1,1 | 1:1,3 |
| Titandioxid | | | | 40,0 |
| Bemerkungen: Zusatz von 1 % Resiflow, 0,5 % Benzoin | | | | |

| Lackdaten | | | | |
|---|---|---|---|---|
| SD (µm) | 70-83 | 75-85 | 64-101 | 65-94 |
| GG 60° <) | n.b. | n.b. | n.b. | 91 |
| GS | 0 | 0 | 0 | 0 |
| ET (mm) | 9 | 8 | >10 | 8 |
| Härtung [T (°C)/t (min)] | 130/30 | 140/20 | 160/10 | 160/20 |
| SD: Schichtdicke GG 60°<): Glanzgrad im 60°-Winkel nach Gardner (ASTM-D 523) GS: Gitterschnitt ET: Erichsentiefung nach DIN 53 156 n.b.: nicht bestimmt | | | | |

| | | | | |
|---|---|---|---|---|
| * Angabe der Einsatzstoffe in Gew.-% | | | | |

## Patentansprüche

1. Feste oxazolinterminierte, urethangruppenhaltige Polyadditionsverbindungen mit einem Schmelzpunkt von 40 bis 130 °C und einem freien NCO-Gehalt von kleiner 3 Gew.-%, im Wesentlichen enthaltend ein Reaktionsprodukt aus
a) mindestens einem mindestens difunktionellen Polyisocyanat und
b) mindestens einem hydroxy- oder aminofunktionellen Oxazolinderivat,
wobei das Äquivalentenverhältnis NCO : OH zwischen 0,8 : 1,2 und 1,2 : 0,8 liegt.

2. Polyadditionsverbindungen nach Anspruch 1,
dadurch gekennzeichnet,
dass ein Äquivalentenverhältnis NCO : OH von 1 : 1 zugrunde liegt.

3. Polyadditionsverbindungen nach den Ansprüchen 1 oder 2,
dadurch gekennzeichnet,
dass als weitere Komponente c) Kettenverlängerer enthalten sind.

4. Polyadditionsverbindungen nach mindestens einem der Ansprüche 1 bis 3,
dadurch gekennzeichnet,
dass aliphatische, cycloaliphatische, (cyclo)aliphatische, aromatische oder heterocyclischen Polyisocyanate enthalten sind.

5. Polyadditionsverbindungen nach mindestens einem der Ansprüche 1 bis 4,
dadurch gekennzeichnet,
dass als Polyisocyanate Isophorondiisocyanat, Hexamethylendiisocyanat, 3-Methylpentamethylen-1,5-diisocyanat, Trimethylhexamethylen-1,6-diisocyanat, 4,4'-Methylen-bis(cyclohexylisocyanat), Diisocyanato-diphenylmethan, Diisocyanatomethylbenzol, 1,3-Bis(isocyanato-methyl)-benzol oder m-Tetramethylxylylen enthalten sind.

6. Polyadditionsverbindungen nach mindestens einem der Ansprüche 1 bis 5,
dadurch gekennzeichnet,
dass Polyisocyanate mit Isocyanurat-, Biuret-, Allophanat-, Urethan- oder Harnstoffstrukturen enthalten sind.

7. Polyadditionsverbindungen nach mindestens einem der Ansprüche 1 bis 6,
dadurch gekennzeichnet,
dass als Kettenverlängerer Polyole, Polyamine und/oder Aminoalko-hole enthalten sind.

8. Polyadditionsverbindungen nach Anspruch 7,
dadurch gekennzeichnet,
dass als Polyole hydroxylgruppenhaltige Polyester, Polythioether, Polyether, Polycaprolactame, Polyepoxide, Polyesteramide oder Polyurethane eingesetzt werden.

9. Polyadditionsverbindungen nach mindestens einem der Ansprüche 1 bis 8,
dadurch gekennzeichnet,
dass als Oxazolin Verbindungen der Formel 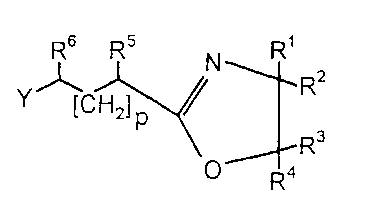 eingesetzt werden, wobei R¹ bis R⁶ Wasserstoffatome oder Alkylgruppen mit 1 bis 4 Kohlenstoffatomen, Y eine Alkohol- oder eine Aminofunktion und p eine Zahl von 0 bis 3 bedeuten.

10. Polyadditionsverbindungen nach Anspruch 9,
dadurch gekennzeichnet,
dass als Oxazolin Verbindungen der Formel 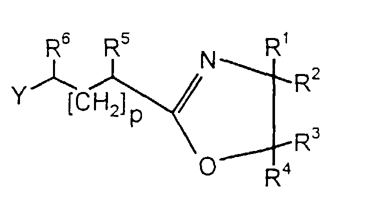 eingesetzt werden, wobei R¹ und R² gleichzeitig doer unabhängig voneinander Wasserstoff oder Methylgruppen, R³ bis R⁶ Wasserstoffatome und p die Zahl 0 oder 3 bedeuten.

11. Verfahren zur Herstellung fester oxazolinterminierter, urethangruppenhaltiger Polyadditionsverbindungen gemäß den Ansprüchen 1 bis 10,
dadurch gekennzeichnet,
dass mindestens ein mindestens difunktionelles Polyisocyanat mit mindestens einem hydroxy- oder aminofunktionalisierten Oxazolinderivat und gegebenenfalls einem Kettenverlängerer bei Temperaturen von 20 bis 120 °C umgesetzt werden, wobei das Äquivalentenverhältnis NCO : OH zwischen 0,8 : 1,2 und 1,2 : 0,8 liegt.

12. Verfahren zur Herstellung oxazolinterminierter, urethangruppenhaltiger Polyadditionsverbindungen gemäß Anspruch 11,
dadurch gekennzeichnet,
dass zur Beschleunigung der Reaktion des Polyisocyanats mit dem hydroxy- oder aminofunktionellen Oxazolin und dem Kettenverlängerer 0,01 bis 5 Gew.-% eines Katalysators eingesetzt werden.

13. Verfahren zur Herstellung oxazolinterminierter, urethangruppenhaltiger Polyadditionsverbindungen gemäß den Ansprüchen 11 bis 12,
dadurch gekennzeichnet,
dass die Umsetzung im Lösemittel erfolgt.

14. Verfahren zur Herstellung oxazolinterminierter, urethangruppenhaltiger Polyadditionsverbindungen gemäß den Ansprüchen 11 bis 12,
dadurch gekennzeichnet,
dass die Umsetzung lösemittelfrei erfolgt.

15. Verwendung der Polyadditionsverbindungen gemäß den Ansprüchen 1 bis 10 zur Herstellung von Kunststoffen.

16. Verwendung der Polyadditionsverbindungen gemäß den Ansprüchen 1 bis 10 zur Herstellung von abspaltfreien, transparenten oder pigmentierten Pulverlacken.

17. Abspaltfreie, transparente oder pigmentierte Pulverlacke, enthaltend Polyadditionsverbindungen nach den Ansprüchen 1 bis 10 in Kombination mit carboxylgruppenhaltigen Polymeren.

18. Pulverlacke gemäß Anspruch 17 in Kombination mit Polycarboxylpolyestern oder Polycarboxylpolyacrylaten.

19. Pulverlacke gemäß Anspruch 18,
dadurch gekennzeichnet,
dass als carboxylgruppenhaltiges Polymer Polyester mit einer Säurezahl von 10 bis 150 mg KOH/g eingesetzt werden.

20. Pulverlacke gemäß Anspruch 18,
dadurch gekennzeichnet,
dass als carboxylgruppenhaltiges Polymer Polyacrylate mit einer Säurezahl von 10 bis 150 mg KOH/g eingesetzt werden.

21. Pulverlacke gemäß den Ansprüchen 17 bis 20,
dadurch gekennzeichnet,
dass diese Polyadditionsverbindungen in Kombination mit carboxylgruppenhaltigen Polymeren und weitere Zuschlags- und Hilfsstoffe enthalten.

22. Pulverlacke gemäß den Ansprüchen 17 bis 21,
dadurch gekennzeichnet,
dass diese Polyadditionsverbindungen in Kombination mit carboxylgruppenhaltigen Polymeren und Katalysatoren in Anteilen von 0,01 bis 5 Gew.-% enthalten.

23. Pulverlacke nach Anspruch 22,
dadurch gekennzeichnet,
dass diese als Katalysator Dibutylzinndilaurat, Titantetrabutylat, Zinkstearat, Zinkacetat, Zinkoctoat, Triethylphosphit oder Triphenylphosphit enthalten.

24. Pulverlacke gemäß den Ansprüchen 17 bis 23,
dadurch gekennzeichnet,
dass die Polyadditionsverbindungen in Kombination mit carboxylgruppenhaltigen Polymeren Wasserfänger, Molekularsiebe, wasserfreies Aluminiumsulfat, Trimethylorthoformiat und/oder p-Toluolsulfonylisocyanat enthalten.

25. Transparente und pigmentierte Pulverlacke gemäß den Ansprüchen 17 bis 24,
dadurch gekennzeichnet,
dass ein COOH/Oxazolin-Verhältnis von 1 : 10 bis 10 : 1 zugrunde liegt.
